# NEUE EUROPÄISCHE PATENTSCHRIFT

(11) **EP 0 488 040 B2**
(45) Veröffentlichungstag und Bekanntmachung des Hinweises auf die Entscheidung über den Einspruch: **01.03.2000**
(45) Hinweis auf die Patenterteilung: 23.07.1997
(21) Anmeldenummer: 91119807.5
(22) Anmeldetag: 21.11.1991
(51) Int. Cl.: C08K 5/01, C08L 25/04, C08J 9/00

(54) **Expandierbare Styrolpolymerisate**
Expandable styrene polymerisates
Polymères styréniques expansibles

(30) Priorität: 29.11.1990 DE 4038043
(43) Veröffentlichungstag der Anmeldung: 03.06.1992
(73) Patentinhaber: BASF Aktiengesellschaft, 67063 Ludwigshafen (DE)
(72) Erfinder: Walter, Manfred, Dr., W-6720 Speyer (DE); Husemann, Wolfram, Dr., W-6730 Neustadt (DE); Naegele, Dieter, Dr., W-6520 Worms 24 (DE)

(56) Entgegenhaltungen:
- EP-A- 106 129
- DE-A- 3 915 602
- GB-A- 1 070 088
- GB-A- 1 077 030
- CHEMICAL ABSTRACTS, vol. 75, no. 2, 12. Juli 1971, Columbus, Ohio, US; abstract no. 6867h, Seite 36
- "Alternative for Trigonox C in expandable polystyrene production", Prospekt der Akzo Chemie, Juli 1989
- "Organic Peroxides", Prospekt der Peroxid-Chemie GmbH, Jan. 1985
- "Polystyrene" Report Nr. 39, SRI, Sept 1981, S.77-78

## Beschreibung

Die Erfindung betrifft benzolfreie expandierbare Styrolpolymerisate.

Handelsübliche expandierbare Styrolpolymerisate enthalten etwa 10 bis 100 ppm Benzol. Sie sind daher für Spezialanwendungen z.B. im medizinischen Bereich oder für Lebensmittelverpackungen nicht geeignet.

Der Erfindung lag die Aufgabe zugrunde, den Benzolgehalt drastisch zu reduzieren. Die Untersuchungen ergaben, daß selbst beim Einsatz von benzolfreiem Styrol und benzolfreien Hilfsstoffen das erhaltene expandierbare Styrolpolymerisat einen Benzolgehalt von mehr als 10 bis 20 ppm aufweist.

Es wurde nun gefunden, daß der Benzolgehalt drastisch reduziert wird, wenn bei der Herstellung als Polymerisationskatalysator eine benzoylgruppenfreie Peroxiverbindung mit einer Halbwertszeit von 1 Stunde bei 120 bis 135°C verwendet wird. Ein derart hergestelltes expandierbares Styrolpolymerisat weist ferner den Vorteil einer verbesserten Expandierbarkeit auf.

Gegenstand der Erfindung sind expandierbare Styrolpolymerisate, enthaltend
a) ein Styrolpolymerisat
b) 1 bis 10 Gew.%, bezogen auf a), eines gesättigten C₃- bis C₆-Kohlenwasserstoffs als Treibmittel und gegebenenfalls
c) übliche Hilfsstoffe in wirksamen Mengen,
   mit einem Benzolgehalt von weniger als 1 ppm und einem Styrolgehalt von weniger als 1000 ppm, wobei das Styrolpolymerisat 0,2 bis 2,5 Verzweigungspunkte pro 1000 Monomereinheiten aufweist.

Gegenstand der Erfindung ist ferner ein Verfahren zur Herstellung expandierbarer Styrolpolymerisate durch Polymerisation von Styrol, gegebenenfalls unter Mitverwendung weiterer Comonomerer, in wäßriger Suspension in Gegenwart von 0,1 bis 1 Gew.% styrollöslichen Peroxiverbindungen als Katalysator, wobei man vor, während oder nach der Polymerisation das Treibmittel und gegebenenfalls übliche Zusatzstoffe zufügt, dadurch gekennzeichnet, daß man als Katalysator Dicumylperoxide in Kombination mit einer Peroxiverbindung mit einer Halbwertszeit von 1 Stunde bei 85 bis 95°C, verwendet und die Polymerisation so führt, daß 30 bis 90 % des Styrols im Temperaturbereich 120 bis 150°C polymerisieren und dag der Reststyrolgehalt im Polymerisat weniger als 0,1 % beträgt.

Es ist bekannt, daß bei Verwendung benzoylgruppenfreier Peroxidverbindungen als Polymerisationskatalysatoren Styrolpolymerisate mit sehr niedrigem Benzolgehalt erhalten werden. Die Herstellung von expandierbaren Styrolpolymerisaten, die 0,2 bis 2,5 Verzweigungspunkte pro 1000 Monomereinheiten enthalten und dadurch einen relativ hohen Schmelzindex und ein gutes Expandiervermögen aufweisen, ist jedoch nirgends beschrieben.

Als Hauptkomponente a) enthalten die neuen Produkte Polystyrol und/oder ein Styrolpolymerisat mit mindestens 50 Gew.%, vorzugsweise mindestens 80 Gew.% einpolymerisiertem Styrol. Als Comonomere kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylcarbazol und Maleinsäure(anhydrid). Vorteilhaft enthält das Styrolpolymerisat eine geringe Menge eines Verzweigers einpolymerisiert, d.h. einer Verbindung mit mehr als einer, vorzugsweise 2 Doppelbindungen. Der Verzweiger wird im allgemeinen in Mengen von 0,005 bis 0,1 Gew.%, bezogen auf Styrol, verwendet.

Auch Mischungen verschiedener Styrolpolymerisate können verwendet werden, wie sie beispielsweise in der DE-A 39 01 329, 39 08 238, 39 36 596, 39 31 862 und 39 16 602 beschrieben sind.

Vorteilhaft verwendet man Styrolpolymerisate mit einer Viskositätszahl (0,5 %ig in Toluol bei 25°C) von 55 bis 85 [ml/g], vorzugsweise 60 bis 80 [ml/g] und einem Schmelzindex MFI (190°C; 3,8 kp) von 5 bis 30 [g/10 min], vorzugsweise 7,5 bis 20 [g/10 min]. Der im Vergleich zu üblichen Styrolpolymerisaten mit gleicher Viskositätszahl stark erhöhte Schmelzindex ist charakteristisch für Styrolpolymerisate, die verzweigt sind und erfindungsgemäß 0,2 bis 2,5, vorzugsweise 0,2 bis 1,0 Verzweigungspunkte pro 1000 Monomereinheiten aufweisen.

Das mittlere Molgewicht der Styrolpolymerisate liegt im allgemeinen zwischen 150 000 und 300 000, vorzugsweise zwischen 180 000 und 270 000. Der Anteil mit einem Molgewicht unter 200 000 liegt im allgemeinen bei 30 bis 80, vorzugsweise bei 40 bis 70 Gew.%. Vorteilhaft weist der Anteil des Styrolpolymerisats mit einem Molgewicht unter 200 000 0,25 bis 3, vorzugsweise 0,5 bis 2,5. Verzweigungen pro 1000 Monomereinheiten auf.

Der Anteil mit einem Molekulargewicht oberhalb 200 000 kann einen geringeren Verzweigungsgrad aufweisen, vorteilhaft weniger als 0,5 Verzweigungen pro 1000 Monomereinheiten.

Die expandierbaren Styrolpolymerisate enthalten als Treibmittel b) 1 bis 10 Gew.%, vorzugsweise 2 bis 7 Gew.%, insbesondere 3 bis 6 Gew.%, bezogen auf a) eines gesättigten C₃- bis C₆-Kohlenwasserstoffs, wie Propan, Butan, Isobutan, n-Pentan, i-Pentan, Neopentan, Cyclopentan und/oder Hexan. Vorzugsweise wird ein handelsübliches Pentan-Gemisch verwendet.

Als Komponente c) können die expandierbaren Styrolpolymerisate übliche Hilfsstoffe, wie Farbstoffe, Pigmente, Füllstoffe, Stabilisatoren, Flammschutzmittel, Synergisten, Keimbildner, Gleitmittel und dgl. in üblichen wirksamen Mengen enthalten.

Als Zusatzstoffe sind auch Poly-(2,6-dimethyl)-1,4-phenylenether und Poly-1,4-phenylensulfid geeignet (vgl. DE-A-39 04 370 und DE-A-39 24 868). Diese Zusätze bewirken eine Erhöhung der Wärmeformbeständigkeit des Schaumstoffs. Geeignete Zusatzstoffe sind auch styrollösliche Elastomere (vgl. DE-A-39 15 602), die die Elastizität des Schaumstoffs erhöhen.

Als Zusatzstoffe geeignet sind auch feinteilige organische Polymere mit einem hohen Wasseraufnahmevermögen geeignet (vgl. DE-A 40 14 261). Diese Zusätze bewirken eine Erhöhung der Rieselfähigkeit.

Die erfindungsgemäßen expandierbaren Styrolpolymerisate sind dadurch gekennzeichnet, daß sie frei bzw. praktisch frei sind an Benzol. Der Benzolgehalt liegt unter 1 ppm, vorzugsweise unter 0,8 ppm. Der Styrolgehalt liegt unter 1000 ppm, insbesondere unter 800 ppm.

Nach einem bevorzugten Verfahren werden die erfindungsgemäßen expandierbaren Styrolpolymerisate hergestellt durch Polymerisation von Styrol, gegebenenfalls unter Mitverwendung von Comonomeren, in wäßriger Suspension, wobei vor, während oder nach der Polymerisation die oben beschriebenen Treibmittel und gegebenenfalls die Zusatzstoffe zugesetzt werden.

Erfindungswesentlich ist es, als Katalysator 0,1 bis 1,0 Gew.%, vorzugsweise 0,2 bis 0,7 Gew.% einer styrollöslichen, benzoylgruppenfreien Peroxiverbindung mit einer Halbwertszeit von 1 Stunde bei 120 bis 135°C zu verwenden. Erfindungsgemäß wird als Katalysator Dicumylperoxid verwendet; daneben werden noch andere übliche Peroxiverbindungen mit einer Halbwertszeit von 1 Stunde bei 85 bis 95°C, wie Dibenzoylperoxid oder tert.-Butylperoxy-2-ethylhexanoat mitverwendet, wobei die Gesamtmenge an Peroxiverbindungen 1 Gew.% nicht überschreiten sollte.

Bei den bislang praktizierten Polymerisationsverfahren wird für die Auspolymerisation tert.-Butylperbenzoat als Katalysator verwendet. Es wurde nun gefunden, daß diese Verbindung offenbar in der Endphase der Polymerisation teilweise zu Benzol zerfällt und somit verantwortlich ist für den Benzolgehalt im expandierbaren Styrolpolymerisat.

Bei der erfindungsgemäßen Verwendung von benzoylgruppenfreien Peroxiverbindungen gelingt es jedoch nicht, Styrol bei der bisher üblichen Temperatur von etwa 120°C auszupolymerisieren.

Erfindungswesentlich ist es daher, die Polymerisation so zu führen, daß 30 bis 90 % des eingesetzten Styrols im Temperaturbereich von 120 bis 150°C zu polymerisieren. Der Ansatz wird dabei solange auf dieser hohen Temperatur gehalten, bis der Styrolgehalt im Polymerisat auf weniger als 0,1 % abgesunken ist.

Überraschenderweise bildet sich unter den erfindungsgemäßen Bedingungen der Polymerisation ein Styralpolymerisat, das sich von dem nach dem herkömmlichen Verfahren erhaltenen durch einen erhöhten Schmelzindex bei gleicher Viskositätszahl unterscheidet. Bei näherer Untersuchung wurde festgestellt, daß das Styrolpolymerisat selbst dann einen beträchtlichen Anteil an verzweigten Molekülen aufweist, wenn keine Monomeren mit zwei oder mehr Doppelbindungen mitverwendet worden sind, und daß der Anteil an Verzweigungen im Molgewichtsbereich unter 200 000 besonders hoch ist.

Man arbeitet üblicherweise unter Verwendung von 0,005 bis 1 Gew.%, vorzugsweise 0,01 bis 0,75 Gew.%, insbesondere 0,02 bis 0,5 Gew.%, eines Reglers mit einer Kettenübertragungskonstante K zwischen 0,1 und 50, vorzugsweise zwischen 1 und 30, wie es in der EP-B 106 129 und DE-A 39 21 148 beschrieben. Geeignete Regler sind beispielsweise Thiole, wie n-Dodecylmercaptan (K = 19), tert.-Dodecylmercaptan (K = 3), n-Butylmercaptan (K = 22) und tert.-Butylmercaptan (K = 3,6), ferner Pentaphenylethan (K = 2,0) und dimeres α-Methylstyrol (K = 0,5).

Geeignete Verzweiger, die im allgemeinen Mengen von 0,001 bis 0,1 Gew.%, vorzugsweise 0,005 bis 0,05 Gew.%, verwendet werden, sind Monomere mit mehr als einer, vorzugsweise zwei polymerisierbaren Doppelbindungen, wie Butadien, Isopren, Vinylcyclohexen, Vinylacrylat, Divinylbenzol, Glykoldimethacrylat, Butandioldiacrylat, Butandioldimethacrylat und Hexandioldiacrylat. Regler und Verzweiger werden entweder vor Polymerisationsbeginn vorgelegt oder aber erst während der Polymerisation, beispielsweise bei einem Umsatz von 20 bis 80 % dem Ansatz zugefügt. Vorteilhaft wird der Regler vorgelegt und der Verzweiger erst während der Polymerisation zugefügt.

Durch gleichzeitige Verwendung von Regler und Verzweiger erhält man ein verzweigtes Styrolpolymerisat mit üblichem Molgewicht, das sich durch ein besonders hohes Expandiervermögen auszeichnet.

Der Gehalt an Styrol in den expandierbaren Styrolpolymerisaten sollte im allgemeinen niedrig sein und weniger als 0,1 Gew.%, insbesondere weniger als 0,08 Gew.% betragen. Zur Erreichung dieses Ziels ist es zweckmäßig, bei Verwendung von Mercaptanen als Regler, diese erst während der Polymerisation bei einem Umsatz zwischen 20 und 90 % zuzufügen.

Die erfindungsgemäßen treibmittelhaltigen Polystyrol-Teilchen sind perlförmig und haben im allgemeinen einen Durchmesser zwischen 0,2 und 4 mm. Sie können nach üblichen Methoden, z.B. mit Wasserdampf, zu Schaumstoffteilchen mit einem Durchmesser zwischen 0,5 und 2 cm und einer Dichte zwischen 0,005 und 0,1 g/cm³ vorgeschäumt werden. Es zeigt sich, daß dabei der Durchsatz erheblich erhöht wird bzw. der gleiche Durchsatz bereits mit geringeren Treibmittelmengen erzielt wird.

Die vorgeschäumten Teilchen können dann nach üblichen Verfahren zu Schaumstoff-Formteilen mit einem Raumgewicht von 0,005 bis 0,1 g/cm³ ausgeschäumt werden.

Die in den Beispielen genannten Teile sind Gewichtsteile.

Die Bestimmung des mittleren Molgewichts (M_{w}) der Styrolpolymerisate erfolgte mittel Gel-Permeationschromatographie.

Die Bestimmung des Verzweigungsgrades erfolgt durch Gel-Permeations-chromatographie, die on-line mit einem Laserstreulichtgerät gekoppelt war nach R.C. Jordan, M.L. Connel, ACS Symposium Series No. 138 (1980), S. 107-129 Size Exclusion Chromatography (GPC), Theodore Provder, Editor. Die Umrechnung in das zur Charakterisierung der Verzweigungsgrade notwendige Verhältnis der mittleren quadratischen Trägheitsradien der verzweigten und linearen Proben erfolgte nach M. Hoffmann, H. Krömer, R. Kuhn: Polymeranalytik I, Georg Thieme Verlag, Stuttgart, 1977. Die Bestimmung der Verzweigungsgrades wurde nach B.H. Zimm, W.H. Stockmayer: J. Chem. Phys. 17 (1949) 1301 für die Anzahl von Verzweigungspunkten n<5 und einer Funktionalität f=4 berechnet.

Die Bestimmung der Viskositätszahl VZ (0,5 %ig in Toluol bei 25°C) erfolgte nach DIN 53 726, die Bestimmung des Schmelzindexes MFI (190°C, 3,8 kp) nach DIN 53 735, jeweils an entgasten Proben.

### Expandierbarkeit

Zur Untersuchung der Expandierbarkeit diente ein mit einem Metallrahmen eingefaßtes Sieb (Maschenweite: 0,1 bis 0,2 mm) mit den Abmessungen 1000 x 800 x 250 mm, welches sich in einem abgeschlossenen Metallgehäuse mit Dampfzuleitung und Dampfabzugsvorrichtung befand.

Der Wasserdampf von 100°C strömte von unten in die Vorschäumapparatur ein, passierte das Drahtgewebe mit den zu prüfenden Produkten und konnte durch die Dampfabzugsvorrichtung wieder entweichen. Vor Beginn der Prüfungen wurde die Apparatur zunächst ca. 5 min vorgeheizt. Anschließend wurden 100 g der expandierenden Peripolymerisate mit einem Teilchendurchmesser zwischen 1,0 und 2,0 mm auf dem Drahtgewebe gleichmäßig verteilt, die Apparatur geschlossen und das Dampfventil geöffnet. Nach bestimmter Zeit wurde das Dampfventil wieder geschlossen und das Metallgehäuse geöffnet. Von dem vorgeschäumten Material wurde anschließend die Schüttdichte bestimmt. Die Tabelle gibt die minimal erreichbare Schüttdichte und dafür erforderliche Vorschäumzeit an.

### Beispiele 1 bis 3 (Vergleich)

In einem druckfesten Rührkessel wurde eine Mischung aus 150 Teilen Wasser, 0,1 Teilen Natriumpyrophosphat, 100 Teilen Styrol, 0,15 Teilen Dibenzoylperoxid, 0,25 % tert.-Butylperbenzoat unter Rühren innerhalb von 2 Stunden auf 90°C erhitzt. Zugesetzt wurden ferner die in der Tabelle angegebenen Mengen an Regler. Die Angabe Zugabezeitpunkt ist ab Polymerisationsbeginn zu verstehen.

Nach 2 stunden bei 90°C wurden 4 Teile einer 10 %igen wäßrigen Lösung von Polyvinylpyrrolidon zugegeben. Dann wurde weitere 2 Stunden bei 90°C, anschließend 2 stunden bei 100°C und schließlich 4 Stunden bei 125°C gerührt. Die Dosierung des Pentans (7,5 Teile) und der sonstigen Zusätze erfolgte zu den in der Tabelle angegebenen Dosierzeiten und den darin angegebenen Mengen.

Das erhaltene Perlpolymerisat mit einem mittleren Teilchendurchmesser von 1,2 mm wurde isoliert, gewaschen und getrocknet.

### Beispiele 4 bis 9

In einem druckfesten Rührkessel wurde eine Mischung aus 150 Teilen Wasser, 0,1 Teilen Natriumpyrophosphat, 100 Teilen Styrol, 0,05 Teilen Dibenzoylperoxid und 0,3 Teilen Dicumylperoxid unter Rühren innerhalb von 2,5 h auf 110°C erhitzt. Zugesetzt wurden ferner die in der Tabelle angegebenen Mengen an Regler und Verzweiger. Die Angabe Zugabezeitpunkt ist ab Polymerisationsbeginn zu verstehen. Weiterhin wurden 3 Stunden nach Polymerisationsbeginn 3 Teile einer 10 %igen wäßrigen Lösung von Polyvinylpyrrolidon zugegeben.

Anschließend wurde innerhalb von 3,5 Stunden bis auf 130°C erhitzt und 3 Stunden bei dieser Temperatur gerührt. Die Dosierung des Pentans (7,5 Teile) und der sonstigen Zusätze erfolgte zu den in der Tabelle angegebenen Dosierzeiten und den darin angegebenen Mengen.

Das erhaltene Perlpolymerisat mit einem mittleren Teilchendurchmesser von 1,2 mm wurde isoliert, gewaschen und getrocknet.

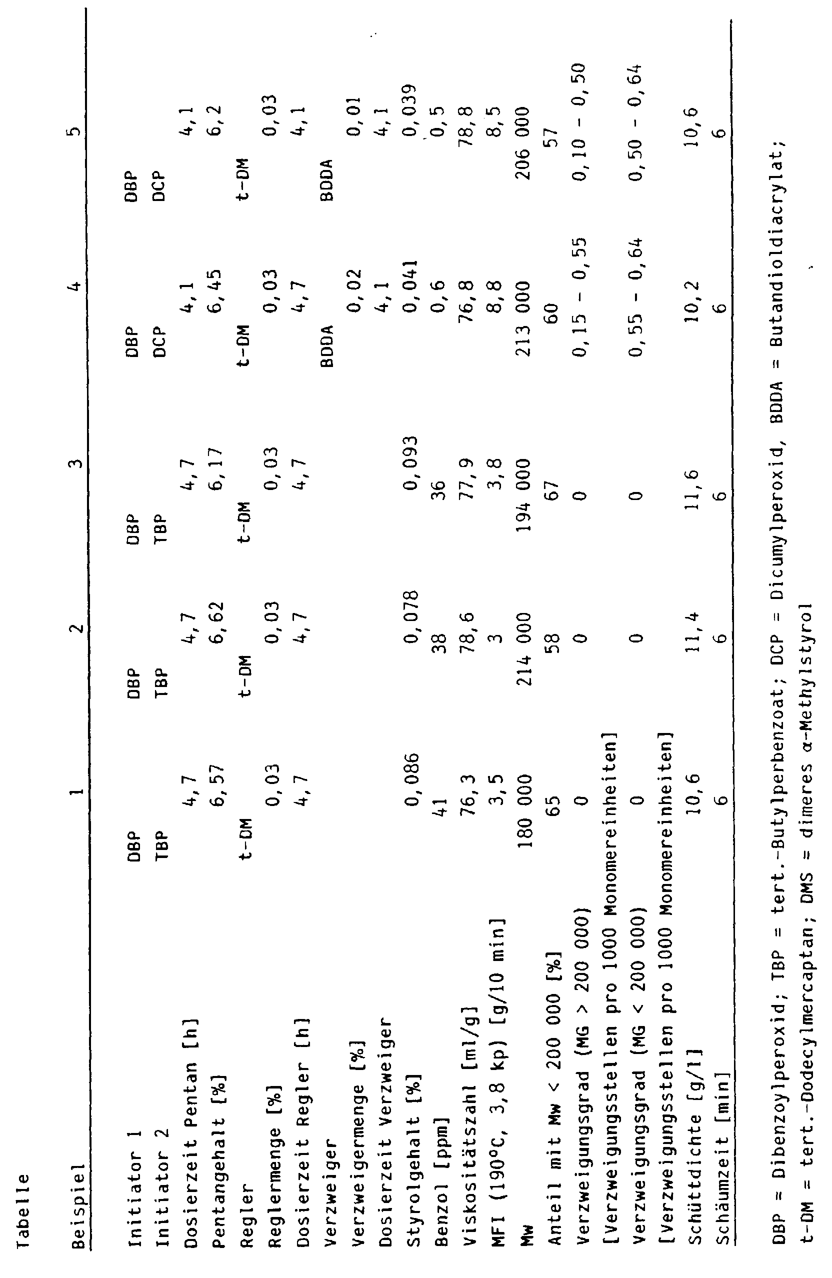

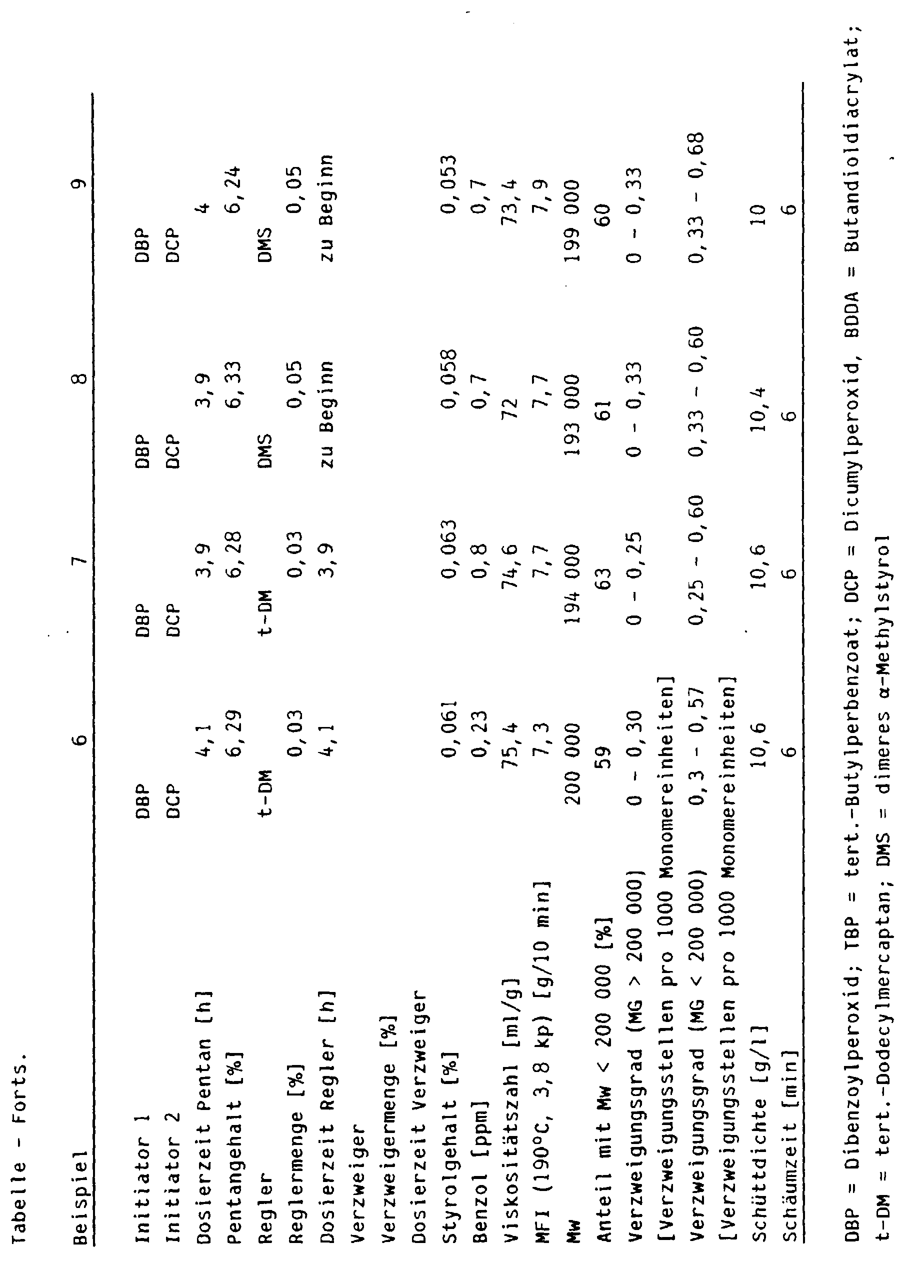

## Patentansprüche

1. Expandierbare Styrolpolymerisate, enthaltend
a) ein Styrolpolymerisat
b) 1 bis 10 Gew.-%, bezogen auf a), eines gesättigten C₃- bis C₆-Kohlenwasserstoffs als Treibmittel und gegebenenfalls
c) übliche Hilfsstoffe in wirksamen Mengen,
mit einem Benzolgehalt von weniger als 1 ppm und einem Styrolgehalt von weniger als 1000 ppm, dadurch gekennzeichnet, daß das Styrolpolymerisat 0,2 bis 2,5 Verzweigungspunkte pro 1000 Monomereinheiten aufweist, die erhältlich sind nach dem Verfahren gemäß Anspruch 7.

2. Expandierbare Styrolpolymerisate gemäß Anspruch 1, dadurch gekennzeichnet, daß das Styrolpolymerisat eine Viskositätszahl (0,5 %ig in Toluol bei 25°C) von 55 bis 85 [ml/g] und einen Schmelzindex MFI (190°C; 3,8 kp) von 5 bis 30 [g/10 min] aufweist.

3. Expandierbare Styrolpolymerisate gemäß den Ansprüchen 1 bis 2, dadurch gekennzeichnet, daß das Styrolpolymerisat ein mittleres Molgewicht M_{w} von 150 000 bis 300 000 aufweist.

4. Expandierbare Styrolpolymerisate gemäß den Ansprüchen 1 bis 3, dadurch gekennzeichnet, daß das Styrolpolymerisat 30 bis 80 Gew.-% Anteile mit einem Molgewicht unter 200 000 aufweist.

5. Expandierbare Styrolpolymerisate gemäß den Ansprüchen 1 bis 4, dadurch gekennzeichnet, daß der Anteil des Styrolpolymerisats mit einem Molgewicht unter 200 000 0,25 bis 3 Verzweigungsprodukte pro 1000 Monomereinheiten aufweist.

6. Expandierbare Styrolpolymerisate gemäß den Ansprüchen 1 bis 5, dadurch gekennzeichnet, daß der Anteil des Styrolpolymerisats mit einem Molgewicht über 200 000 weniger als 0,5 verzweigungspunkte pro 1000 Monomereinheiten aufweist.

7. Verfahren zur Herstellung expandierbarer Styrolpolymerisate durch Polymerisation von Styrol, gegebenenfalls unter Mitverwendung weiterer Comonomerer, in wäßriger Suspension in Gegenwart von 0,1 bis 1 Gew.-% einer styrollöslichen, benzoylgruppenfreien Peroxidverbindung mit einer Halbwertszeit von 1 Stunde bei 120 bis 135°C, in Kombination mit einer Peroxidverbindung mit einer Halbwertszeit von 1 Stunde bei 85 bis 95°C, wobei man vor, während oder nach der Polymerisation das Treibmittel und gegebenenfalls übliche Zusatzstoffe zufügt, dadurch gekennzeichnet, daß die benzoylgruppenfreie Peroxidverbindung Dicumylperoxid ist, und daß man die Polymerisation so führt, daß 30 bis 90 % des Styrols im Temperaturbereich 120 bis 150°C polymerisieren und daß der Reststyrolgehalt im Polymerisat weniger als 0,1 % beträgt.

## Claims

1. An expandable styrene polymer which comprises
a) a styrene polymer,
b) from 1 to 10% by weight, based on a), of a saturated C₃- to C₆-hydrocarbon as blowing agent, and, if desired,
c) conventional assistants in effective amounts,
having a benzene content of less than 1 ppm and a styrene content of less than 1000 ppm, wherein the styrene polymer contains from 0.2 to 2.5 branching points per 1000 monomer units, and is obtainable by the process of claim 7.

2. An expandable styrene polymer as claimed in claim 1, wherein the styrene polymer has a viscosity number (0.5% strength in toluene at 25°C) of from 55 to 85 [ml/g] and a melt flow index MFI (190°C; 3.8 kp) of from 5 to 30 [g/10 min].

3. An expandable styrene polymer as claimed in claims 1 to 2, wherein the styrene polymer has a mean molecular weight M_{w} of from 150,000 to 300,000.

4. An expandable styrene polymer as claimed in claims 1 to 3, wherein the styrene polymer contains from 30 to 80% by weight of components having a molecular weight of less than 200,000.

5. An expandable styrene polymer as claimed in claims 1 to 4, wherein the component of the styrene polymer having a molecular weight of less than 200,000 contains from 0.25 to 3 branching points per 1000 monomer units.

6. An expandable styrene polymer as claimed in claims 1 to 5, wherein the component of the styrene polymer having a molecular weight of greater than 200,000 contains less than 0.5 branching points per 1000 monomer units.

7. A process for the preparation of an expandable styrene polymer by polymerizing styrene, in the presence or absence of further comonomers, in aqueous suspension in the presence of from 0.1 to 1% by weight of a styrene-soluble, benzoyl-free peroxide compound having a half life period of 1 hour at from 120 to 135°C, in combination with a peroxide compound having a half life period of 1 hour at from 85 to 95°C, the blowing agent and, if used, conventional additives being added before, during or after the polymerization, wherein the benzoyl-free peroxide compound is dicumyl peroxide, and wherein the polymerization is carried out in such a manner that from 30 to 90% of the styrene polymerize at from 120 to 150EC and wherein the residual styrene content in the polymer is less than 0.1%.

## Revendications

1. Polymères du styrène expansibles, qui contiennent
a) un polymère du styrène
b) 1 à 10% en poids, par rapport à a), d'un hydrocarbure en C₃ à C₈ saturé, à titre d'agent porogène et, éventuellement
c) des adjuvants usuels en proportions actives,
et qui présentent une teneur en benzène inférieure à 1 ppm et une teneur en styrène inférieure à 1000 ppm, caractérisés en ce que le polymère de styrène présente 0,2 à 2,5 points de ramification par 1000 unités monomériques, que l'on peut obtenir par mise en oeuvre du procédé suivant la revendication 7.

2. Polymères du styrène expansibles suivant la revendication 1, caractérisés en ce que le polymère du styrène possède un indice de viscosité (à 0,5% dans le toluène à 25°C) de 55 à 85 [ml/g] et un indice de fusion MFI (190°C; 3,8 kp) de 5 à 30 [g/10 min.].

3. Polymères du styrène expansibles suivant la revendication 1 ou 2, caractérisés en ce que le polymère du styrène possède un poids moléculaire moyen Mₚ de 150.0000 à 300.000.

4. Polymères du styrène expansibles suivant les revendications 1 à 3, caractérisés en ce que le polymère du styrène présente des fractions de 30 à 80% en poids d'un poids moléculaire inférieur à 200.000.

5. Polymères du styrène expansibles suivant les revendications 1 à 4, caractérisés en ce que la fraction du polymère du styrène qui possède un poids moléculaire inférieur à 200.000 présente de 0,25 à 3 points de ramification par 1000 unités monomériques.

6. Polymères du styrène expansibles suivant les revendications 1 à 5, caractérisés en ce que la fraction du polymère du styrène qui possède un poids moléculaire supérieur à 200.000 présente moins de 0,5 point de ramification par 1000 unités monomériques.

7. Procédé de fabrication de polymères du styrène expansibles par la polymérisation du styrène, en recourant éventuellement à l'utilisation conjointe d'autres comonomères, en suspension aqueuse, en présence de 0,1 à 1% en poids d'un composé du type peroxy soluble dans le styrène et dépourvu de radicaux benzoyle, qui présente une durée de demi-vie utile d'une heure à 120-135°C, en combinaison avec un composé du type peroxy d'une durée de demi-vie utile d'une heure à 85-95°C, l'agent porogène et les additifs habituels éventuels étant ajoutés avant, pendant, ou après la polymérisation, caractérisé en ce que le composé du type peroxy dépourvu de radicaux benzoyle est du peroxyde de dicumyle, et en ce qu'on entreprend la polymérisation de manière que de 30 à 90% du styrène polymérisent dans la plage des températures de 120 à 150°C et que la teneur en styrène résiduel dans le polymère demeure inférieure à 0,1%.
